# EUROPEAN PATENT APPLICATION

(11) **EP 0 574 991 A1**
(43) Date of publication of application: **22.12.1993**
(21) Application number: 93201658.7
(22) Date of filing: 10.06.1993
(51) Int. Cl.: G06F 13/40

(54) **A data processing system adaptable to the type of microprocessor installed and method for detecting the microprocessor type**

(30) Priority: 17.06.1992 FR 9207676
(71) Applicant: Hewlett-Packard Company, Palo Alto, California 94304 (US)
(72) Inventor: Cuvillier, Pierre, c/o Hewlett-Packard France, F-38320 Eybens (FR)
(74) Representative: Squibbs, Robert Francis

(57) **Abstract**

A data processing system includes a mainboard provided with a socket for installing any type of microprocessor of a same family, the microprocessors of the family being incompatible by the specific functions of predetermined microprocessor pins. The system includes: a program stored in a non-volatile memory operable for detecting the microprocessor type; a register accessible in write mode by the program; and switches controlled by the bits of the register and placed between the predetermined pins and the system.

## Description

### BACKGROUND OF THE INVENTION

### Field of the Invention

The present invention relates to microcomputers that are normally marketed with a basic microprocessor and whose power can be increased by simply changing the microprocessor or by adding a second microprocessor of the same family.

The invention more particularly relates to such microcomputers whose microprocessors, although belonging to the same family and having compatible input and output signals, have connection incompatibilities.

The invention will be described in relation with microcomputers using for example microprocessors of the 486 family manufactured by Intel.

### Discussion of the Related Art

In the 486 family, there are presently 5 types of microprocessors: 486SX, 487SX, 486DX, the so-called "Overdrive", and 486DX2. The 486SX does not include a math coprocessor. The other types include a math coprocessor; the "Overdrive" and 486DX2 additionally include an internal clock frequency doubler. Each microprocessor is encapsulated in a so-called PGA square ceramic package provided on one face with a pin matrix. The central portion of the matrix is free of pins. The rows and columns of the matrix are numbered from A to S, and from 1 to 17, respectively. Thus, for example, reference A15 designates the pin of row A and of the fifteenth column.

There is also a so-called PQFP package, that is to be soldered, for the 486SX microprocessor only.

The following table gives the functions of the incompatible pins of the various PGA-package microprocessors of the 486 family.

| Pin Number | 486DX and 486DX2 | 486SX | 487SX and Overdrive |
|---|---|---|---|
| A13 | not used | not used | FERR# |
| C14 | FERR# | not used | not used |
| B15 | NMI | not used | NMI |
| A15 | IGNNE# | NMI | IGNNE# |

The signals conveyed through the incompatible pins are designated by FERR#, NMI and IGNNE#. Symbol "#" indicates that the corresponding signal is at a low active level. Signal FERR# is an output signal of the microprocessor indicating by a low state that a coprocessor error has occurred. Signal NMI is a non-maskable interruption signal to be provided to the microprocessor. Signal IGNNE# is an input signal of the microprocessor indicating that a coprocessor error must be ignored.

There are three different types of pin layouts, corresponding to each column of the table, respectively. The 487SX package is further provided with an additional key pin D4 that does not convey signals. The future types of microprocessor will be compatible with either one of these three pin layouts.

Presently, microcomputers using only one type of mainboard accommodating any one of the various types of microprocessor of the 486 family are manufactured. This avoids to provide three different types of mainboard and further allows a customer to exchange his microprocessor. The advantage of such microcomputers for the customer is that he can buy an inexpensive microcomputer initially equipped with, for example, a 486SX microprocessor that can be subsequently replaced with a more powerful microprocessor. To achieve this purpose, the microprocessors are inserted in zero insertion force sockets and, conventionally, jumpers must be correctly placed, as a function of the microprocessor installed, in order to connect the incompatible pins A13, A15, B15 and C14 to the corresponding lines of the mainboard.

However, the positioning of jumpers is subject to errors and one must refer to the user's manual of the microcomputer, which is tedious for a user with little technical knowledge.

### SUMMARY OF THE INVENTION

An object of the invention is to provide a system for detecting the installed microprocessor and for automatically connecting the incompatible pins with suitable lines.

This object is achieved by replacing the jumpers with switches suitably controlled by a program for detecting the type of microprocessor installed, the program being executed by the microprocessor itself. Indeed, it has been noticed according to the invention, first, that the type of microprocessor could be detected by a program and, second, that the execution of such a program by the microprocessor does not require the use of the signals conveyed through the incompatible pins.

The invention more particularly relates to a data processing system including a mainboard provided with a socket for installing any type of microprocessor of a same family, the microprocessors of this family being incompatible by the specific functions of predetermined microprocessor pins. According to the invention, the system includes: a program stored in a non-volatile memory operable for detecting the microprocessor type; a register accessible in write mode by the program; and switches controlled by the register bits and placed between the predetermined pins and the system.

According to an embodiment of the invention, the mainboard is provided with a first microprocessor and a socket to install a second microprocessor of the same family. There is provided a latch, enabled by a power-on reset signal, whose output is connected to a disabling pin of the first microprocessor and whose input is connected to a pin of the socket, associated with a pin providing a signal that is at a predetermined level; at least during a predetermined time interval at power-on.

A detection program implements a method according to the invention for connecting a set of predetermined microprocessor pins to a chipset, the functions of the pins of the set of pins being different for distinct types of microprocessor of the same family. The method provides the following steps carried out by the microprocessor itself at the initialization: saving the content of a predetermined register of the microprocessor, the register containing, at initialization, an identifier of at least one type of microprocessor belonging to the family; and adequately connecting the set of pins as a function of the type of microprocessor identified.

According to an embodiment of the invention, if the identifier simultaneously identifies a first type of microprocessor including a math coprocessor, and a second type of microprocessor without coprocessor, the method includes the following steps: executing an instruction providing a different result depending on whether the coprocessor is present or not; and identifying the first type of microprocessor if the result of the execution is the expected result, or identifying the second type of microprocessor otherwise.

According to an embodiment of the invention, if the identifier simultaneously identifies third and fourth microprocessor types which are distinct in that the associated sets of pins differ by the position of a predetermined pin providing a signal operable to generate an interruption, the method includes the following steps: connecting the set of pins according to one of the possibilities associated with the third or fourth types of microprocessor; executing an instruction causing the generation of the signal; and, if an interruption is generated, maintaining the current connection of the set of pins, otherwise, connecting the set of pins according to the second of the possibilities associated with the third or fourth types of microprocessor.

The foregoing and other objects, features, aspects and advantages of the invention will become apparent from the following detailed description of the present invention which should be read in conjunction with the accompanying drawings.

### Brief Description of Drawings

Fig. 1A schematically shows an embodiment according to the invention of a data processing system wherein electronic switches connect incompatible pins of a microprocessor to appropriate lines;
Fig. 1B shows states of control signals to be applied to the switches of Fig. 1A as a function of the microprocessor installed;
Fig. 2 is a flow-chart of operations implemented according to the invention in order to detect the type of microprocessor installed and to adequately control the switches of Fig. 1A; and
Fig. 3 schematically shows a circuitry for disabling a first microprocessor by the installation of a second microprocessor.

### Detailed Description

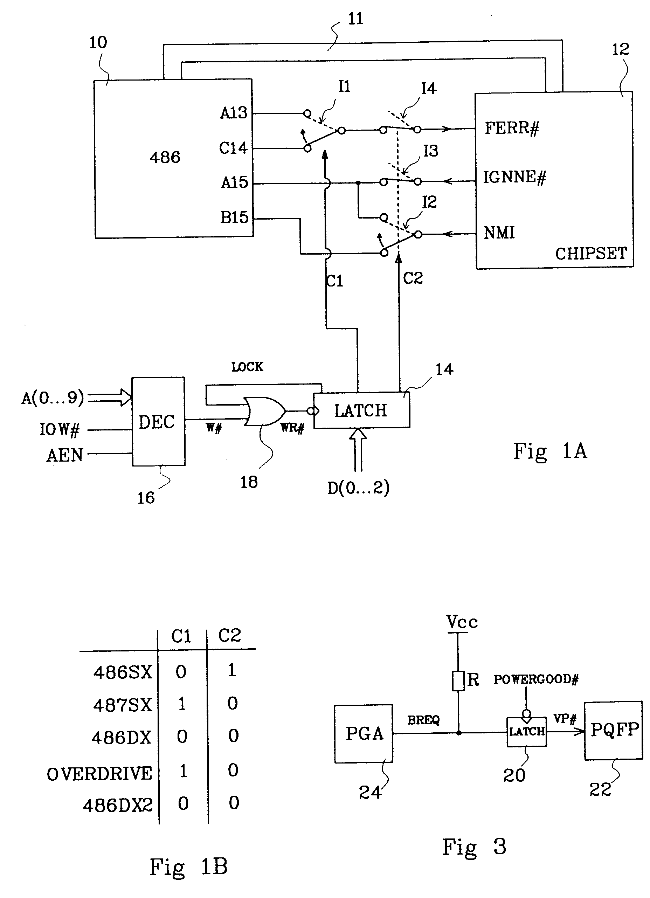

In Fig. 1A is shown a microprocessor 10 of the 486 family, with a PGA package, mounted on a socket. All the pins of this microprocessor, except those (A13, A15, B15 and C14) which are incompatible between the different types of microprocessor, are conventionally connected by lines 11 to peripheral circuits 12 of the microprocessor, commonly referred to as "Chipset". Of course, the socket is chosen to also accommodate the 487SX microprocessor whose package is provided with an additional key pin. One or the other of the incompatible pins A13 and C14 is connected to the above-mentioned line FERR# of the chipset by a switch I1 controlled by a signal C1. When signal C1 is at 0, switch I1 is, for example, at the represented position connecting pins C14 to line FERR#, pin A13 being disconnected. When signal C1 is at 1, switch I1 connects pin A13 to line FERR#, pin C14 being then disconnected.

One or the other of the incompatible pins A15 and B15 is connected to the above-mentioned line NMI of the chipset through a switch I2 controlled by a signal C2. A switch I3 controlled by the same signal C2 is placed between pin A15 and the above-mentioned line IGNNE# of the chipset. A switch I4, also controlled by signal C2, is placed between switch I1 and line FERR#. When signal C2 is at 0, switches I2-I4 are, for example, in the positions represented, that is, they connect pin A15 to line IGNNE#, pin B15 to line NMI, and switch I1 to line FERR#. When signal C2 is at 1, lines IGNNE# and FERR# are disconnected and line NMI is connected to pin A15, pin B15 being disconnected.

Switches I1-I4 are symbolically represented and can be fabricated in any other adequate way by those skilled in the art, using logic or three-state gates. If the non-connected lines and/or pins are to be connected to fixed voltages, those skilled in the art will also be capable of fabricating the switches.

Signals C1 and C2 are generated by a program-accessible register 14 (LATCH), i.e., register 14 can be addressed in write mode and store a value provided on a data bus D of the data processing system. To achieve this purpose, the inputs of register 14 are connected to lines of bus D and the selection input of the register is connected to the output of an address decoder 16, in turn connected to an address bus A of the system.

Conventionally, two types of addresses are available, namely, memory addresses and peripheral addresses or input/output (I/O) addresses. Memory addresses are used to access the Random Access Memory (RAM) of the system in order to store programs to execute and data. The I/O addresses are used to access the peripheral devices (monitor, printer, etc. ), as well as programmation registers of certain circuits.

Preferably, an I/O address is chosen to select register 14. Indeed, many I/O addresses are conventionally available, whereas the availability of memory addresses is uncertain. The address decoder 16 receives, as is conventional for I/O address decoders, the first ten lines A0-A9 of the address bus A, a line IOW# for selecting peripheral devices in write mode and a line AEN for inhibiting peripheral devices. The selection signal W# provided by decoder 16 is applied to the selection input WR# of register 14 through an OR gate 18 whose function is described hereinafter.

Two latches of register 14, whose states are modified respectively by two lines of the data bus D, for example D0 and D1, establish the states of the control signals C1 and C2 of the switches. Thus, the states of signals C1 and C2 are established by the two lowest weight bits of data written at the I/O address of register 14.

In order to not accidentally modify the content of register 14 once signals C1 and C2 are adequately established, any subsequent write operation in register 14 is prevented by the OR gate 18. An input LOCK of the OR gate is connected to an additional latch of register 14, whose state is fixed by an additional line, for example D2, of the data bus D. Thus, by writing a 1 in this additional latch, gate 18 no longer provides the active signal W# selecting register 14. In practice, once the type of the installed microprocessor has been detected, a binary value 1XX is written in register 14; the first bits XX of the binary value correspond to the states of signals C1 and C2, and the third bit is at 1 to block register 14.

Fig. 1B is a table where are shown the states of signals C1 and C2 to be chosen, with respect to the described positions of switches I1-I4 of Fig. 1A, for the various types of microprocessor of the 486 family. This table need not be described. It will be noted that the position of switches I1-I4 shown in Fig. 1A corresponds to the microprocessors of the 486DX and 486DX2 type.

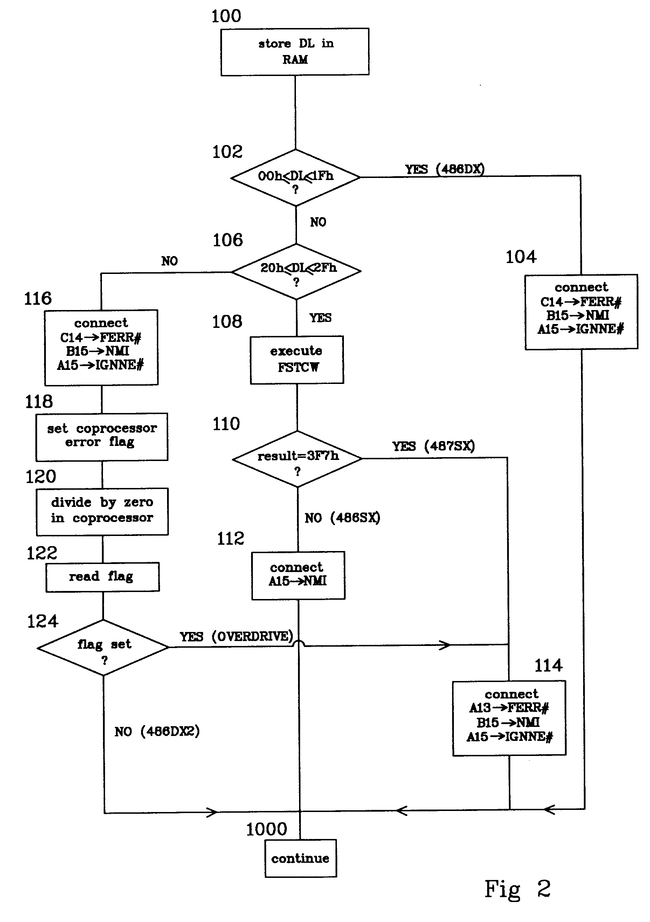

Fig. 2 is a flow-chart of the operations carried out by a program implementing the method according to the invention in order to detect the type of microprocessor that is installed and to write adequate values in register 14 so as to establish the suitable connections of the incompatible pins. This program must be the first one executed and can be an initial part of a conventional program commonly referred to as "Power On Self Test" (POST) stored in a non-volatile memory (ROM). It is essential that this program be executed first because one of the microprocessor registers of the 486 family, the register usually referenced DX (which has no relation with the 486DX type), contains at power-on of the microprocessor an identifier that is specific to one or two types of microprocessor of the family.

Before executing any instruction using the microprocessor registers, it is therefore necessary to execute an instruction for saving the content of register DX in RAM. In fact, it is the first byte DL of register DX that contains the identifier. A value comprised between 20h and 2Fh (in hexadecimal) of byte DL identifies a microprocessor of the 486SX or 487SX type. A value comprised between 00h and 1Fh identifies the microprocessor of the 486DX type. A value comprised between 30h and 3Fh identifies a microprocessor of the "Overdrive" or 486DX2 type. It appears that the simple reading of identifier DL does not allow to differentiate the 486SX type from the 487SX, or the "Overdrive" type from the 486DX2.

The program described below allows to avoid these uncertainties. Hereinafter, a paragraph describing a flow-chart block is preceded by the block number.
100. The first instruction executed by the program stores the value of the first byte DL of register DX in RAM.
102. It is checked whether value DL is comprised between 00h and 1Fh.
104. Value DL is comprised between 00h and 1Fh. The microprocessor used is of the 486DX type. Pin C14 must be connected to line FERR#, pin B15 to line NMI and pin A15 to line IGNNE#. To achieve this, the binary value 00 is written in register 14 in order to select the corresponding position of switches I1-I4. (In fact, binary value 100 is written in register 14 to prevent any subsequent access to this register).
   The program is then ended; and conventional operations for testing and booting the microcomputer are continued in block 1000.
106. It is checked whether the value DL is comprised between 20h and 2Fh.
108. Value DL is comprised between 20h and 2Fh. The 486SX type must be differentiated from the 487SX type. The difference between these two types is the absence, in the 486SX, of a math coprocessor. An instruction requiring the presence of a coprocessor, or an instruction reacting differently if the coprocessor is present or not, is executed.
   For example, the so-called FSTCW instruction is executed, which serves to store at a selected memory address the content of a register, CW, of the coprocessor. At power-on, register CW contains value 3F7h. If the coprocessor is absent, the execution of instruction FSTCW stores value FFFFh at the selected address.
110. The result provided by the instruction is checked. For example, by executing instruction FSTCW at power-on with a selected memory address, value 3F7h is found at the selected address when the coprocessor is present and value FFFFh, otherwise.
112. The result (FFFFh) indicates that the coprocessor is absent. Thus, the microprocessor is of the 486SX type. Pin A15 must be connected to line NMI and lines IGNNE# and FERR# must be disconnected, as shown in Figs. 1A and 1B, by writing the binary value 01 in register 14.
   The program then ends at block 1000.
114. The result (3F7h) indicates that the coprocessor is present. Then, the microprocessor used is of the 487SX type. Pin A13 must be connected to line FERR#, pin B15 to line NMI and pin A15 to line IGNNE#, which is done by writing the binary value 10 in register 14.
   The program then ends at block 1000.
116. Value DL is not comprised between 00h and 2Fh; it is then assumed that value DL is comprised between 30h and 3Fh. The microprocessor used is either of the "Overdrive" or 486DX2 type. These two types are provided with a coprocessor and are different in that the functions of pins A13 and C14 are reversed (one of the pins must be connected to line FERR#, the second pin being disconnected). In this case, it is chosen to connect the pins according to either one of the types, for example 486DX2 (the connection is identical to that of the 486DX type). This connection is not hazardous because signal FERR# is an output signal of the microprocessor; thus, there is no risk for a signal (NMI, IGNNE#) of the chipset to be shorted to an unused pin of the microprocessor of uncertain voltage.
   The active state of signal FERR# indicates that an error occurred in the coprocessor. The following steps of the detection program consist in generating a coprocessor error and detecting whether line FERR# of chipset 12 actually receives this active state. If line FERR# receives this active state, the initial connection was the right one; otherwise, the second connection (corresponding to the "Overdrive" type) must be selected.
   When an erroneous instruction of the coprocessor is executed, signal FERR# is asserted, which conventionally causes the generation of a hardware interruption, so-called IRQ13, by the chipset 12. A low level program stored in ROM, commonly referred to as "Basic Input/output System" (BIOS) governs the hardware interruptions (that is, those caused by error signals, such as signal FERR#). Conventionally, at a hardware interruption, the microprocessor momentarily interrupts the current program and executes a BIOS routine that is intended to process the interruption.
   This BIOS routine is provided, according to an embodiment of the invention, for disabling a predetermined flag of a microprocessor register or of the RAM. Of course, the flag is enabled before causing the assertion of signal FERR#.
118. The detection program enables the flag.
120. A coprocessor error is caused, thus causing the assertion of signal FERR#. For example, a sequence of instructions is executed, causing a division by zero in the coprocessor, such as sequence FLD1 (push value 1 on a stack), FLDZ (push value 0 on the stack), and FDIV (dividing the first value (1) pushed on the stack by the second value (0)).
   If the connection selected in block 116 is the right one, chipset 12 receives the error signal FERR#. Then, the above-mentioned BIOS routine is executed and disables the flag. If the connection carried out in block 116 is not the right one, chipset 12 does not receive signal FERR#, the BIOS routine is not executed and the flag is not disabled.
122. The flag is read.
124. It is checked whether the flag is still enabled. If the flag is not enabled, signal FERR# has been taken into account. Then, the connection selected at block 116 is the right one and the microprocessor is of the 486DX2 type.

The program then ends at block 1000.

If the flag is still enabled, signal FERR# has been ignored. Then, the connection selected at block 116 is not the right one and the microprocessor is of the "Overdrive" type. The connection corresponding to the "Overdrive" type (that is identical to the connection of the 487SX type) is selected in block 114.

Thus, when the detection program is quitted in block 1000, the system is automatically adapted to the type of microprocessor that is installed, without requiring an operator action. The detection program can be designed to display the type of microprocessor detected on a monitor.

As mentioned above, the 486SX microprocessor is also available in a package to be soldered of the so-called PQFP type. Since the PQFP package is less expensive than the PGA package, it will be common to find microcomputers initially equipped with the 486SX microprocessor (which is the least powerful) in a PQFP package. Additionally, a PGA package socket will be provided on the microcomputer mainboard, so as to enable the user to install a more powerful microprocessor of the 486 family.

When a user installs a more powerful microprocessor, the PQFP package 486SX microprocessor must be disabled. PQFP package 486SX microprocessors include a pin UP# that, when it is set to an active level (0), disables the microprocessor by setting all its pins to high impedance. The problem encountered is to disable the PQFP package 486SX microprocessor when a new microprocessor is installed in the socket.

Fig. 3 schematically shows how to solve this problem. There is provided a latch 20 whose output is connected to pin UP# of the PQFP-microprocessor 22. The input of latch 20 is connected to a specific pin of the PGA package socket 24. This specific socket pin receives a pin of the microprocessor to be installed, whose characteristic feature is to be at an active state, at least during a predetermined time interval at power-on of the microprocessor. Such a pin is, for example, pin BREQ that provides a signal indicating that the microprocessor needs to use the bus. Latch 22 is enabled by a conventional power-on reset signal (usually referred to as "POWERGOOD#"). A resistor R, connected between the input of the latch and a fixed voltage, such as the supply voltage Vcc, forces the latch input to an inactive level when the PGA-microprocessor is absent.

If a PGA-microprocessor is installed, signal BREQ is set to an active state at power-on. This active state is loaded in the latch due to signal "POWERGOOD#" and disables the PQFP-microprocessor as long as the system remains powered.

As is apparent to those skilled in the art, various modifications can be made to the above disclosed embodiments. In particular, the flow-chart of Fig. 2 is given by way of example; those skilled in the art will be able to realize equivalent programs operating according to different flow-charts.

A program realizing the steps described with reference to the flow-chart of Fig. 2 can be written by any programmer.

Although the invention has been described for microprocessors of the 486 family, it applies to any family including microprocessors with compatible input and output signals but with some incompatible pins conveying signals that are not strictly necessary for a correct execution of a program or of some instructions by the microprocessors. In that case, those skilled in the art will be able to use the specific features of the incompatible pins and of the various microprocessors for detecting the type of microprocessor that is installed.

## Claims

1. A method for connecting a set of predetermined microprocessor pins to a chipset, the functions of the pins of said set of pins being different for distinct types of microprocessor of a same family (486), including the following steps carried out by the microprocessor itself at initialization:
- saving the content of a predetermined register (DL) of the microprocessor, said register containing, at initialization, an identifier of at least one type of microprocessor belonging to said family; and
- adequately connecting said set of pins as a function of the type of microprocessor identified.

2. The connection method of claim 1, wherein, if the identifier simultaneously identifies a first type of microprocessor (487SX) including a math coprocessor, and a second type of microprocessor (486SX) without coprocessor, the method includes the following steps:
- executing an instruction (FSTCW) providing a different result depending on whether the coprocessor is present or not; and
- identifying the first type of microprocessor if the result of the execution is the expected result, or identifying the second type of microprocessor otherwise.

3. The connection method of claim 1, wherein, if said identifier simultaneously identifies third (486DX2) and fourth (OVERDRIVE) microprocessor types which are distinct in that the associated sets of pins differ by the position of a predetermined pin providing a signal (FERR#) operable to generate an interruption, the method includes the following steps:
- connecting the set of pins according to one of the possibilities associated with the third or fourth types of microprocessor;
- executing an instruction causing the generation of said signal (FERR#); and,
- if an interruption is generated, maintaining the current connection of the set of pins, otherwise, connecting the set of pins according to the second of the possibilities associated with the third or fourth types of microprocessor.

4. A data processing system including a mainboard provided with a socket for installing any type of microprocessor of a same family (486), the microprocessors of said family being incompatible by the specific functions of predetermined microprocessor pins, including:
- a program stored in a non-volatile memory (ROM) operable for detecting the microprocessor type;
- a register (14) accessible in write mode by said program; and
- switches (I1-I4) controlled by the bits of said register and placed between said predetermined pins and the system.

5. The data processing system of claim 4, in which the mainboard is provided with a first microprocessor and a socket to install a second microprocessor of the same family, wherein there is provided a latch, enabled by a power-on reset signal (POWERGOOD#), whose output is connected to a disabling pin (UP#) of the first microprocessor and whose input is connected to a pin of said socket, associated with a pin providing a signal (BREQ) that is at a predetermined level, at least during a predetermined time interval at power-on.
